# EUROPEAN PATENT APPLICATION

(11) **EP 4 050 605 A1**
(43) Date of publication of application: **31.08.2022**
(21) Application number: 21217460.1
(22) Date of filing: 23.12.2021
(51) Int. Cl.: G11B 27/34, G11B 27/031, H04N 21/80, G06F 3/048

(54) **METHOD AND DEVICE FOR EDITING VIDEO**

(30) Priority: 25.02.2021 CN 202110213835
(71) Applicant: Beijing Dajia Internet Information Technology Co., Ltd., Beijing 100085 (CN)
(72) Inventor: XIE, Songlun, Beijing, 100085 (CN)
(74) Representative: Vossius & Partner Patentanwälte Rechtsanwälte mbB

(57) **Abstract**

The disclosure relates to editing a video, including classifying (S101) video clips to be edited according to live broadcast sessions and displaying a classification of each live broadcast session on a first user interface, in response to receiving selection of a target live broadcast session on the first user interface, displaying (S102) a second user interface corresponding to the target live broadcast session, wherein video clips corresponding to the target live broadcast session are displayed on the second user interface, and in response to receiving selection of a target video clip on the second user interface, editing (SI03) the target video clip.

## Description

### TECHNICAL FIELD

The disclosure relates to the field of video technologies, and in particular, to editing videos with respect to live broadcast videos.

### BACKGROUND

As a popular Internet culture in recent years, live video broadcasts enable anchor and audience to have real-time video interactions. However, due to the real-time nature of the live broadcasts, users may not be able to watch a complete live broadcast video or edit highlight clips separately for derivative creation.

### SUMMARY

The present disclosure provides systems, methods, non-transitory computer-readable media, and apparatuses for editing a video based on a live broadcast video.

According to some arrangements of the disclosure, a method for editing the video includes classifying video clips to be edited according to live broadcast sessions and displaying a classification of each live broadcast session on a first user interface, in response to receiving selection of a target live broadcast session on the first user interface, displaying a second user interface corresponding to the target live broadcast session, video clips corresponding to the target live broadcast session are displayed on the second user interface, and in response to receiving selection of a target video clip on the second user interface, editing the target video clip.

According to some arrangements of the disclosure, a device for editing the video includes a display module, an input module configured to receive a user input, and a control module configured to classify video clips to be edited according to live broadcast sessions and control the display module to display a classification of each live broadcast session on a first user interface, control the display module to display a second user interface corresponding to a target live broadcast session based on selection of the target live broadcast session on the first user interface by a user, wherein video clips corresponding to the target live broadcast session are displayed on the second user interface, and edit a target video clip based on selection of the target video clip on the second user interface by the user.

According to some arrangements of the disclosure, an electronic device includes at least one processor and at least one memory storing computer-executable instructions, the computer-executable instructions, when being run by the at least one processor, cause the at least one processor to carry out one or more methods for editing a video as described herein.

According to some arrangements of the disclosure, a computer-readable storage medium storing instructions which, when being run by at least one processor, cause the at least one processor to carry out one or more methods for editing a video as described herein.

According to some arrangements of the disclosure, instructions in a computer program product are run by at least one processor in an electronic device to carry out one or more methods for editing a video as described herein.

It should be noted that the above general description and the following detailed description are merely example and explanatory and should not be construed as limiting of the disclosure.

### BRIEF DESCRIPTION OF THE DRAWINGS

The accompanying drawings, which are incorporated in and constitute a part of this disclosure, illustrate arrangements consistent with the disclosure and, together with the description, serve to explain the principles of the disclosure, and do not expose any improper limitation on the disclosure.
FIG. 1 is a flowchart showing a method for editing a video according to an example arrangement.
FIG. 2 is a schematic diagram showing a first user interface according to an example arrangement.
FIG. 3 is a schematic diagram showing a second user interface according to an example arrangement.
FIG. 4 is a schematic diagram showing a third user interface according to an example arrangement.
FIG. 5 is a schematic diagram showing a second user interface according to another example arrangement.
FIG. 6 is a schematic structural diagram of a device for editing a video according to an example arrangement.
FIG. 7 is a block diagram showing an apparatus for editing a video according to an example arrangement.
FIG. 8 is a block diagram showing an electronic device according to an example arrangement.

### DETAILED DESCRIPTION

In order to enable those of ordinary skilled in the art to better understand the technical solutions of the disclosure, the technical solutions in arrangements of the disclosure will be described clearly and completely with reference to the accompanying drawings.

The following description with reference to the accompanying drawings is provided to help comprehensively understand arrangements of the disclosure defined by claims and their equivalents. Various specific details are included to help understanding, but these details are only to be regarded as illustrative. Therefore, those ordinary skilled in the art will recognize that various changes and modifications can be made to the arrangements described herein without departing from the scope and spirit of the disclosure. In addition, for clarity and conciseness, descriptions of well-known functions and structures are omitted.

The terms and words used in the following description and claims are not limited to written meanings, but are only used by the inventor to achieve a clear and consistent understanding of the disclosure. Therefore, it should be clear for those skilled in the art that the following description of the various arrangements of the disclosure is provided only for illustrative purposes and not for limiting the disclosure defined by the claims and their equivalents.

It should be noted that the terms "first", "second" and so on in the specification, claims, and the above-mentioned drawings of the disclosure are used to distinguish similar objects, and are not necessarily used to describe a specific order or sequence. It should be understood that the data used in this way can be interchanged under appropriate circumstances so that the arrangements of the disclosure described herein can be implemented in an order other than those illustrated or described herein. The implementations set forth in the following example arrangements do not represent all implementations consistent with the disclosure. Instead, they are merely examples of apparatuses and methods consistent with some aspects of the disclosure as recited in the appended claims.

In the related art, when a video editing is performed, a video clip that can be edited is directly shown to a user, and when the user selects a certain video clip, it pops up on a video editing page. However, when the user has a lot of live broadcast-related video clips to be edited, the existing display method is rather messy, and the user cannot determine which live broadcast session the current video clip is related to. In addition, in popping the video up to the corresponding editing page each time the video clip is selected, when a preview of to-be edited videos is required, each video clip needs to be selected one by one, which causes degrades user experience and is inefficient.

In view of such problems, the present disclosure provides methods for optimizing a live broadcast editing flow, in which the video clips corresponding to each live broadcast session are displayed in a form of a folder, and an overall process of the live broadcast editing is completed with minimal pages. Hereinafter, according to various arrangements of the disclosure, methods and devices of the disclosure will be described in detail with reference to the accompanying drawings.

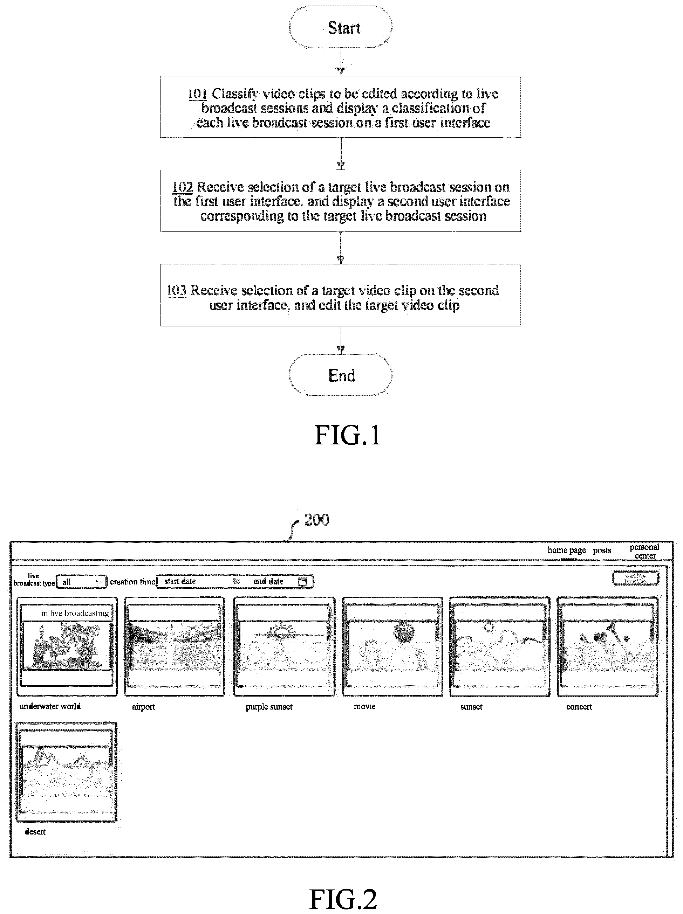

FIG. 1 is a flowchart showing a method for editing a video according to an example arrangement. The method for editing the video shown in FIG. 1 is suitable for editing live broadcast clips during or after the live broadcast. The video editing method in FIG. 1 can be performed by an electronic device. The electronic device may include at least one of, for example, a smart phone, a tablet personal computer (PC), a mobile phone, a video phone, an e-book reader, a desktop PC, a laptop PC, a netbook computer, a work station, a server, a personal digital assistant (PDA), a portable multimedia player (PMP), a moving picture expert group (MPEG-1 or MPEG-2) audio layer 3 (MP3) player, a camera, a wearable device, and so on.

Referring to FIG. 1, in S101, video clips to be edited are classified according to live broadcast sessions and a classification of each live broadcast session is displayed on a first user interface. In some arrangements, the classification of each live broadcast session can be displayed in a form of a folder, and each folder may include video clips of a respective live broadcast session. The video clips related to the same live broadcast session can be placed into one folder, and multiple video clips associated with the same live broadcast session can be displayed in association, as shown in FIG. 2. Referring to FIG. 2, on a first user interface 200, each folder contains multiple video clips related to the same live broadcast session. Each folder can be named according to video contents (such as "underwater world", "airport", etc.), and a first video frame of the live broadcast session or an image that can represent the corresponding video contents can be displayed on a cover of each folder. Thus, it is easier for the user to distinguish the contents in each folder. In addition, in a case where there is a video that is being live broadcasted, the video that is being live broadcasted can be displayed on a first display position of the first user interface 200. For a folder that includes the video that is being live broadcasted (for example, the "Underwater World" folder in FIG. 2), the video that is being live broadcasted can be displayed in real time on the cover of the folder, and a text "in live broadcasting" is marked at a position of the folder, such as an upper right corner of the folder. However, the disclosure is not limited to only the above examples.

According to the arrangements of the disclosure, the videos to be edited are displayed in a unit of a live broadcast session, so that the user can more quickly find the contents of the required live broadcast session.

Referring back to Fig. 1, in S102, selection of a target live broadcast session on the first user interface is received, and a second user interface corresponding to the target live broadcast session is displayed. Video clips corresponding to the target live broadcast session are displayed on the second user interface.

For example, the second user interface can be displayed by selecting the folder of a certain live broadcast session by the user. For example, in response to the user selecting a folder of a live broadcast session, a side frame can be slid out from a side (such as the right side) of the first user interface, as the second user interface. In another example, in response to the user selecting the folder of the live broadcast session, the second user interface corresponding to the selected folder completely or partially covers the first user interface. However, the above display manners are only examples, and the disclosure is not limited thereto.

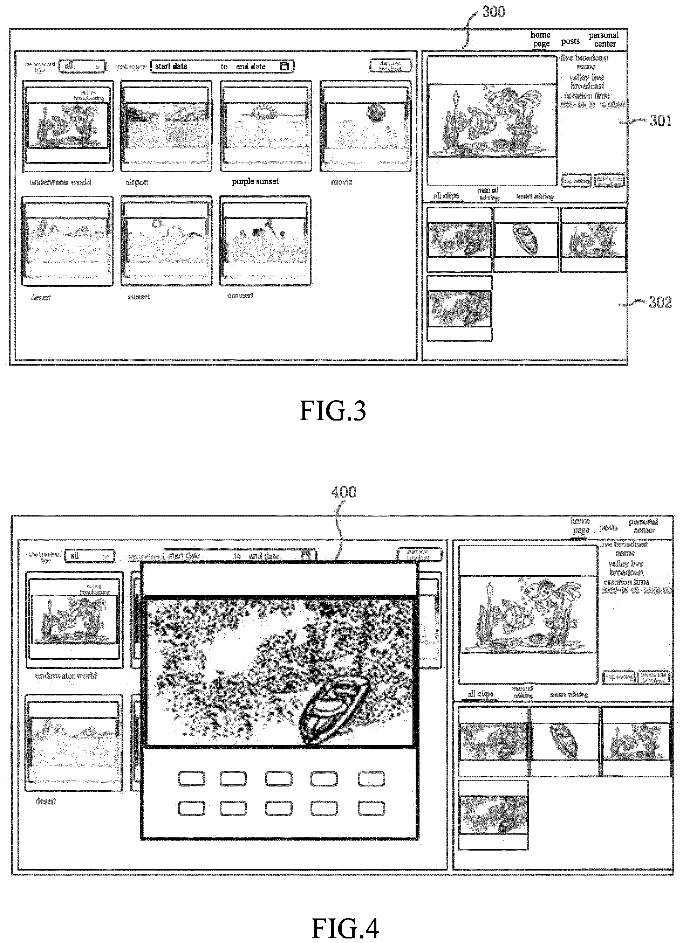

Referring to FIG. 3, the second user interface 300 is slid out from the right side of the first user interface. In this case, the second user interface 300 may occupy a part of the first user interface 200 and the folders previously displayed on the first user interface can be rearranged on the remaining part of the first user interface 200, as shown in FIG. 3.

In FIG. 3, the second user interface 300 can be divided into two parts. In an upper part 301, a complete video of the live broadcast session selected by the user can be displayed for the user to preview, and detailed information of the live broadcast session is displayed, for example, a live broadcast Name, creation time, live broadcast start time, live broadcast end time, the number of manually edited video clips, the number of automatically edited video clips, etc. Multiple video clips or all video clips of the selected live broadcast session are displayed in a lower part 302. The video clips displayed on the lower part 302 can be classified into all video clips, manually edited video clips, and automatically edited video clips. In response to the user selecting all video clips, all the video clips are displayed on the lower part 302. In response to the user selecting the manually edited video clips, the video clips that have been manually edited are displayed on the lower part 302. However, the disclosure is not limited to the above examples.

In response to the user selecting one folder, the live broadcast video in this folder can be displayed on the upper part 301 of the second user interface 300. In response to the user switching between multiple folders (that is, multiple pieces of live broadcast data), the switched-to video contents can be displayed on the upper part 301 of the second user interface 300 accordingly, so as to facilitate the user's browsing.

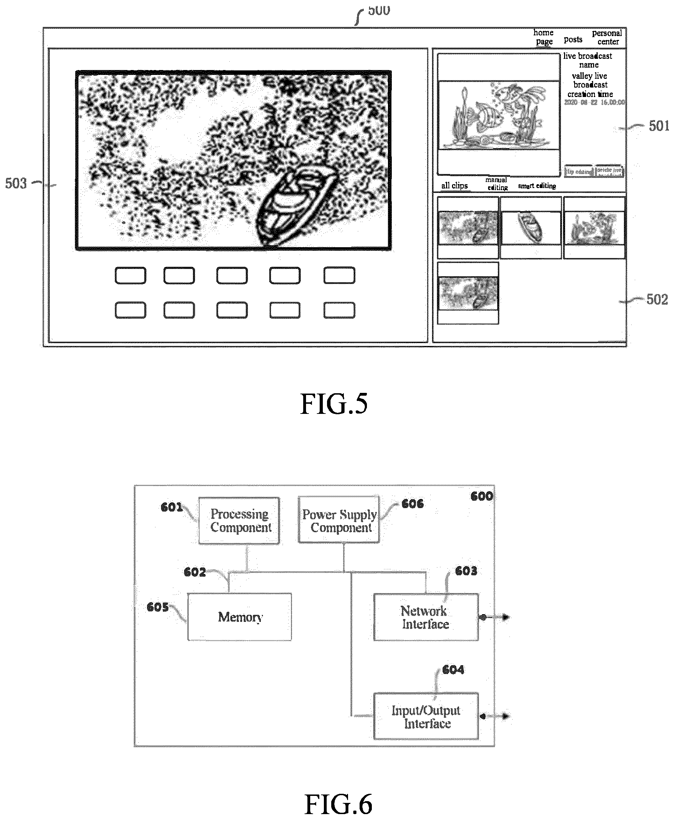

Referring to FIG. 5, the second user interface 500 completely covers the first user interface. The second user interface 500 may include a first area 501, a second area 502, and a third area 503. The complete video and specific information of the target live broadcast session are displayed in the first area 501, the video clips of the target live broadcast session are displayed in the second area 502, and an editing page for editing the video clip is displayed in the third area 503. However, the disclosure is not limited to the above examples.

In some arrangements, in response to the user selecting a certain folder on the first user interface 200, the second user interface 500 covers the first user interface, and various information related to the selected folder is displayed in the first area 501, including the complete video of the live broadcast session corresponding to the folder and detailed information of the live broadcast. Various video clips related to the live broadcast session are displayed in the second area 502, including video clips generated through automatic recognition and video clips manually edited, which is convenient for the user to view. The editing page for editing the video is displayed in the third area 503.

Referring back to Fig. 1, in S103, selection of a target video clip on the second user interface is received, and the target video clip is edited. For example, based on the selection of the target video clip on the second user interface, a third user interface corresponding to the target video clip is displayed, where the third user interface is an editing page for editing a video clip, and the target video clip is edited by using the third user interface. For example, the third user interface can be displayed in a form of a modal pop-up window.

For example, in response to the user selecting a certain video clip on the second user interface 300, the third user interface for editing the video clip can be displayed. For example, the third user interface can be displayed in the form of a modal pop-up window, as shown in FIG. 4. The user can trigger various functions for video editing through the third user interface 400. When the user has completed the editing or needs to reselect a video clip to be edited, the user can close the third user interface 400, and then select the video clip that the user wants to edit on the second user interface 300. The modal pop-up window is a pop-up window that cannot be closed automatically without user interaction. For example, when the third user interface is superimposed on the second user interface in the form of modal pop-up window, the user needs to perform operations on the third user interface, such as clicking a close icon, so as to close the third user interface and return to the second user interface.

Referring to FIGS. 3 and 4, when the user closes the third user interface 400, the user can see the previous user interface, including the folders corresponding to the live broadcast sessions and the previously selected live broadcast session and video clips. In this way, when completing editing of one video clip, the user can re-locate another video clip to be edited, thus improving the efficiency of editing the videos by the user.

For another example, in the case of the second user interface 500, in response to the user selecting a certain video clip in the second area 502, the selected video clip can be placed in the third area 503, that is, the editing page for editing the selected video clip is displayed in the third area 503. The user can edit the selected video clip by operating various function buttons on the editing page in the third area 503.

According to the arrangements of the disclosure, in the entire process of editing the video by the user, not only the number of the editing page jumps is reduced, but also the user can more easily locate the video clip desired to be edited, thus effectively shortening the use time, and improving the editing efficiency.

FIG. 6 is a schematic structural diagram of a device for editing a video of a hardware operating environment according to an arrangement of the disclosure.

As shown in FIG. 6, the video editing device 600 may include: a processing component 601, a communication bus 602, a network interface 603, an input/output interface 604, a memory 605, and a power supply component 606. The communication bus 602 is used to implement connection and communication between these components. The input/output interface 604 may include a video display (such as a liquid crystal display), a microphone and a speaker, and a user interaction interface (such as a keyboard, a mouse, a touch input device, etc.). In some arrangements, the input/output interface 604 may also include a standard wired interface or wireless interface. In some arrangements, the network interface 603 may include the standard wired interface or wireless interface (such as a wireless fidelity interface). The memory 605 can be a high-speed random access memory or a stable non-volatile memory. In some arrangements, the memory 605 may also be a storage device independent of the foregoing processing component 601.

Those skilled in the art can understand that the structure shown in FIG. 6 does not constitute a limitation on the video editing device 600, and there may be more or fewer components than those shown in the figure, some components may be combined, or there may be different component arrangements.

As shown in FIG. 6, the memory 605 as a storage medium may include an operating system (such as a MAC operating system), a data storage module, a network communication module, a user interface module, a video editing program, and a database.

In the video editing device 600 shown in FIG. 6, the network interface 603 is mainly used for data communication with external devices/terminals; the input/output interface 604 is mainly used for data interaction with the user; the processing component 601 and the memory 605 in the video editing device 600 can be disposed in the video editing device 600, and the video editing device 600 calls the video editing program stored in the memory 605 and various APIs provided by the operating system through the processing component 601 to perform the method for editing the video provided by the arrangements of the disclosure.

The processing component 601 may include at least one processor, and the memory 605 stores a set of computer-executable instructions. When the set of computer-executable instructions is executed by the at least one processor, the method for editing the video according to the arrangements of the disclosure is executed. In addition, the processing component 601 can perform encoding operations, decoding operations, and so on. However, the disclosure is not limited to the above examples.

The processing component 601 can classify video clips to be edited according to live broadcast sessions and control the input/output interface 604 to display a classification of each live broadcast session on a first user interface, receive selection of the target live broadcast session on the first user interface, and display a second user interface corresponding to the target live broadcast session, where the video clips corresponding to the target live broadcast session are displayed on the second user interface, receive the selection of the target video clip on the second user interface, and clip the target video clip.

In some arrangements, the classification of each live broadcast session can be displayed in a form of a folder, wherein each folder may include video clips of a respective live broadcast session.

In some arrangements, in a case where there is a video that is being live broadcasted, a folder corresponding to an ongoing live broadcast session can be displayed at a specific location of the first user interface, wherein the video that is being live broadcasted can be displayed on a cover of the folder.

In some arrangements, the processing component 601 may control the input/output interface 604 to display the second user interface by sliding it out from a side of the first user interface, or covering the first user interface with the second user interface.

In some arrangements, based on the selection of the target video clip on the second user interface, the processing component 601 may control the input/output interface 604 to display a third user interface corresponding to the target video clip, where the third user interface is a editing page for editing a video clip; and edit the target video clip by using the third user interface.

In some arrangements, the processing component 601 may control the input/output interface 604 to display the third user interface in a form of a modal pop-up window.

In some arrangements, the second user interface may include a first area and a second area, wherein a complete video and specific information of the target live broadcast session are displayed in the first area, and the video clips of the target live broadcast session are displayed in the second area.

In some arrangements, the second user interface may further include a third area, where an editing page for editing the video clip is displayed in the third area; based on the selection of the target video clip in the second area, the processing component 601 can control the input/output interface 604 to display the editing page for editing the target video clip in the third area, and edit the target video clip by using the editing page.

The video editing device 600 may receive or output a video and/or audio via the input/output interface 604. For example, the user can output the edited live broadcast clip via the input/output interface 604 to share with other users.

In some arrangements, the video editing device 600 can be a PC computer, a tablet device, a personal digital assistant, a smart phone, or other devices capable of executing the above instruction set. Here, the video editing device 600 is not necessarily a single electronic device, and may also be an integration of any device or circuit capable of executing the above instructions (or instruction set) alone or in combination. The video editing device 600 may also be a part of an integrated control system or system manager, or can be configured as a portable electronic device interconnected locally or remotely via an interface (e.g., via wireless transmission).

In the video editing device 600, the processing component 601 may include a central processing unit (CPU), a graphics processing unit (GPU), a programmable logic device, a dedicated processor system, a microcontroller, or a microprocessor. As an example and not a limitation, the processing component 601 may also include an analog processor, a digital processor, a microprocessor, a multi-core processor, a processor array, a network processor, or the like.

The processing component 601 can run the instructions or codes stored in the memory, and the memory 605 can also store data. The instructions and data can also be sent and received over the network via the network interface 603, where network interface 603 can use any known transmission protocol.

The memory 605 can be integrated with the processing component 601, for example, a RAM or a flash memory is arranged in an integrated circuit microprocessor or the like. In addition, the memory 605 may include an independent device, such as an external disk drive, a storage array, or any other storage device that can be used by a database system. The memory and the processing component 601 can be operatively coupled, or may communicate with each other, for example, through an I/O port, a network connection, or the like, so that the processing component 601 can read the data stored in the memory 605.

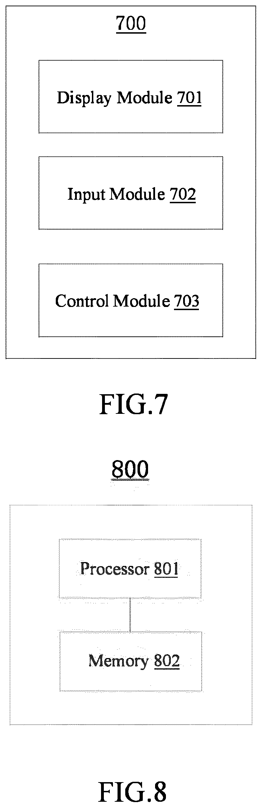

FIG. 7 is a block diagram showing a video editing device according to an example arrangement.

Referring to FIG. 7, the video editing device 700 may include a display module 701, an input module 702, and a control module 703. Each of the modules in the video editing device 700 can be implemented by one or more modules, and a name of the corresponding module may vary according to a type of the module. In various arrangements, some modules in the video editing device 700 can be omitted, or additional modules may also be included. In addition, modules/elements according to the arrangements of the disclosure can be combined to form a single entity, which can thus equivalently perform the functions of the corresponding modules/elements before the combination.

The input module 702 can receive a user input.

The control module 703 can classify video clips to be edited according to live broadcast sessions and control the display module 701 to display a classification of each live broadcast session on a first user interface.

The control module 703 can control the display module 701 to display a second user interface corresponding to a target live broadcast session based on selection of the target live broadcast session on the first user interface by a user, wherein video clips corresponding to the target live broadcast session are displayed on the second user interface; and edit a target video clip based on selection of the target video clip on the second user interface by the user.

In some arrangements, the classification of each live broadcast session can be displayed in a form of a folder, wherein each folder may include video clips of a respective live broadcast session, as shown in FIG. 2.

In some arrangements, in a case where there is a video that is being live broadcasted, the control module 703 may control the display module 701 to display a folder corresponding to an ongoing live broadcast session at a specific location of the first user interface, and the video that is being live broadcasted can be displayed on a cover of the folder.

In some arrangements, the control module 703 may control the display module 701 to display the second user interface in the following manner: sliding it out from a side of the first user interface; or covering the first user interface with the second user interface.

In some arrangements, the control module 703 may control the display module 701 to display a third user interface corresponding to the target video clip based on the selection of the target video clip on the second user interface, wherein the third user interface is a editing page for editing a video clip; and edit the target video clip by using the third user interface.

In some arrangements, the control module 703 may control the display module 701 to display the third user interface in a form of a modal pop-up window, as shown in FIG. 4.

In some arrangements, the second user interface may include a first area and a second area, wherein a complete video and specific information of the target live broadcast session are displayed in the first area, and the video clips of the target live broadcast session are displayed in the second area, as shown in FIG. 3.

In some arrangements, the second user interface may further include a first area, a second area, and a third area, the complete video and the specific information of the target live broadcast session are displayed in the first area, the video clips of the target live broadcast session are displayed in the second area, and the editing page for editing the video clip is displayed in the third area, as shown in FIG. 5.

The control module 703 may control the display module 701 to display the editing page for editing the target video clip in the third area based on the selection of the target video clip in the second area, and edit the target video clip by using the editing page.

According to an arrangement of the disclosure, there is provided an electronic device. FIG. 8 is a block diagram of an electronic device according to an arrangement of the disclosure. The electronic device 800 may include at least one memory 802 and at least one processor 801. The at least one memory 802 stores a computer-executable instruction set which, when being executed by the at least one processor 801, carries out the method for editing the video according to the arrangements of the disclosure.

The processor 801 may include a central processing unit (CPU), a graphics processing unit (GPU), a programmable logic device, a dedicated processor system, a microcontroller, or a microprocessor. As an example and not a limitation, the processing component 801 may also include an analog processor, a digital processor, a microprocessor, a multi-core processor, a processor array, a network processor, or the like.

The memory 802 as a storage medium may include an operating system (such as a MAC operating system), a data storage module, a network communication module, a user interface module, a video editing program, and a database.

The memory 802 can be integrated with the processor 801, for example, a RAM or a flash memory is arranged in an integrated circuit microprocessor or the like. In addition, the memory 802 may include an independent device, such as an external disk drive, a storage array, or any other storage device that can be used by a database system. The memory 802 and the processor 801 can be operatively coupled, or may communicate with each other, for example, through an I/O port, a network connection, or the like, so that the processor 801 can read files stored in the memory 802.

In addition, the electronic device 800 may also include a video display (such as a liquid crystal display) and a user interaction interface (such as a keyboard, a mouse, a touch input device, etc.). All components of the electronic device 800 can be connected to each other via a bus and/or a network.

Those skilled in the art can understand that the structure shown in FIG. 8 does not constitute a limitation, and there may be more or fewer components than those shown in the figure, or certain components can be combined, or there may be different component arrangements.

According to the arrangements of the disclosure, there is provided a computer-readable storage medium storing instructions which, when executed by at least one processor, cause the at least one processor to carry out the method for editing the video according to the disclosure. Examples of the computer-readable storage medium here include: a read only memory (ROM), a random access programmable read only memory (PROM), an electrically erasable programmable read only memory (EEPROM), a random access memory (RAM), a dynamic random access memory (DRAM), a static random access memory (SRAM), a flash memory, a non-volatile memory, a CD-ROM, CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a blue-ray or optical disc storage, a hard disk drive (HDD), a solid state hard disk (SSD), a card storage (such as a multimedia card, a secure digital (SD) card or an extreme digital (XD) card), a magnetic tape, a floppy disk, a magneto-optical data storage device, an optical data storage device, a hard disk, a solid state disk and any other device configured to store computer programs and any associated data, data files, and data structures in a non-transitory manner and provide the computer programs and any associated data, data files, and data structures to the processor or a computer, so that the processor or the computer can execute the computer program. The computer program in the above-mentioned computer-readable storage medium can run in an environment deployed in a computer device such as a client, a host, an agent device, a server, etc. In addition, for example, the computer program and any associated data, data files, and data structures are distributed on networked computer systems, so that they are stored, accessed, and executed in a distributed manner through one or more processors or computers.

According to the arrangements of the disclosure, there also is also provided a computer program product, and instructions in the computer program product can be executed by a processor of a computer device to complete the above-mentioned method for editing the video.

Other arrangements of the disclosure will be readily conceived of by those skilled in the art from consideration of the specification and practice of the disclosure disclosed herein. The present application is intended to cover any variations, uses, or adaptations of the disclosure, which follow the general principles of the disclosure and include common general knowledge or conventional technical means in the art that are not disclosed in the disclosure. The specification and arrangements are illustrative, and the real scope and spirit of the disclosure is defined by the appended claims.

It should be understood that the disclosure is not limited to the precise structures that have been described above and shown in the drawings, and various modifications and changes can be made without departing from the scope thereof. The scope of the disclosure is defined only by the appended claims.

## Claims

1. A method for editing a video, comprising:
classifying (S101) video clips to be edited according to live broadcast sessions and displaying a classification of each live broadcast session on a first user interface;
in response to receiving selection of a target live broadcast session on the first user interface, displaying (S102) a second user interface corresponding to the target live broadcast session, wherein video clips corresponding to the target live broadcast session are displayed on the second user interface; and
in response to receiving the selection of a target video clip on the second user interface, displaying a third user interface for a user to edit the target video clip.

2. The method according to claim 1, wherein the classification of each live broadcast session is displayed in a form of a folder, and each folder comprises video clips of a respective live broadcast session.

3. The method according to claim 2, wherein in a case where there is a video that is being live broadcasted, a folder corresponding to an ongoing live broadcast session is displayed at a specific location of the first user interface, and
wherein the video that is being live broadcasted is displayed on a cover of the folder.

4. The method according to claim 1, wherein said displaying the second user interface corresponding to the target live broadcast session comprises:
displaying the second user interface by sliding it out from a side of the first user interface; or
covering the first user interface with the second user interface.

5. The method according to claim 1, wherein said displaying the third user interface corresponding to the target video clip comprises: displaying the third user interface in a form of a modal pop-up window.

6. The method according to claim 1, wherein the second user interface comprises a first area and a second area, a complete video and specific information of the target live broadcast session are displayed in the first area, and the video clips of the target live broadcast session are displayed in the second area.

7. The method according to claim 6, wherein the second user interface further comprises a third area, and an editing page for editing a video clip is displayed in the third area,
wherein said displaying the third user interface comprises displaying the editing page for editing the target video clip in the third area.

8. A device (700) for editing a video, comprising:
a display module (701);
an input module (702), configured to receive a user input; and
a control module (703), configured to:
classify video clips to be edited according to live broadcast sessions and control the display module to display a classification of each live broadcast session on a first user interface;
control the display module to display a second user interface corresponding to a target live broadcast session in response to receiving selection of a target live broadcast session on the first user interface, wherein video clips corresponding to the target live broadcast session are displayed on the second user interface; and
control the display module to display a third user interface for a user to edit a target video clip in response to receiving the selection of the target video clip on the second user interface by the user.

9. The device according to claim 8, wherein the classification of each live broadcast session is displayed in a form of a folder, and each folder comprises video clips of a respective live broadcast session.

10. The device according to claim 9, wherein in a case where there is a video that is being live broadcasted, a folder corresponding to an ongoing live broadcast session is displayed at a specific location of the first user interface, and
wherein the video that is being live broadcasted is displayed on a cover of the folder.

11. The device according to claim 8, wherein the control module is configured to control the display module to display the second user interface in the following manner: sliding it out from a side of the first user interface; or covering the first user interface with the second user interface.

12. The device according to claim 8, wherein the control module is configured to control the display module to display the third user interface in a form of a modal pop-up window.

13. The video editing device according to claim 8, wherein the second user interface comprises a first area and a second area, a complete video and specific information of the target live broadcast session are displayed in the first area, and the video clips of the target live broadcast session are displayed in the second area.

14. The video editing device according to claim 13, wherein the second user interface further comprises a third area, and an editing page for editing a video clip is displayed in the third area, and
wherein the control module is configured to control the display module to display the editing page for editing the target video clip in the third area in response to receiving the selection of the target video clip on the second user interface.

15. A non-transitory computer-readable storage medium, wherein instructions in the computer-readable storage medium, when being executed by a processor of an electronic device, cause the electronic device to carry out the method for editing a video according to any one of claims 1 to 7.
